# Europäisches Patentamt

## European Patent Office

## Office européen des brevets

(11) Veröffentlichungsnummer: **0 082 441**
**B1**

(12) ## EUROPÄISCHE PATENTSCHRIFT

(45) Veröffentlichungstag der Patentschrift:
20.07.88

(21) Anmeldenummer: **82111471.7**

(22) Anmeldetag: **10.12.82**

(51) Int. Cl.⁴: **B 23 Q 23/00**, G 01 B 5/00

(54) Verfahren und Einrichtung zur Ermittlung und Korrektur von Führungsfehlern.

(30) Priorität: **23.12.81 DE 3150977**

(43) Veröffentlichungstag der Anmeldung:
**29.06.83 Patentblatt 83/26**

(45) Bekanntmachung des Hinweises auf die Patenterteilung:
**20.07.88 Patentblatt 88/29**

(84) Benannte Vertragsstaaten:
**CH DE FR GB IT LI SE**

(56) Entgegenhaltungen:
**FR-A-2 152 267**
**FR-A-2 233 602**
**GB-A-807 994**
**US-A-3 555 254**

**MACHINERY AND PRODUCTION ENGINEERING,**
**Band 128, Nr. 306, 21. April 1976, Seiten 377-378,**
**Burgess Hill, GB; M. BURDEKIN u.a.: "An error-**
**correction system for machine tools"**

(73) Patentinhaber: **Firma Carl Zeiss, D-7920**
**Heidenheim (Brenz) (DE)**

(72) Erfinder: **Herzog, Klaus, Kopernikusstrasse 42,**
**D-7082 Oberkochen (DE)**

## Beschreibung

Die Erfindung betrifft ein Verfahren zur Ermittlung von Führungsfehlern und Kompensierung ihres Einflußes auf die Genauigkeit der Lagebestimmung des geführten Teiles.

Prinzipiell können bei einer einzelnen Führung 5 verschiedene Führungsfehler auftreten: drei Rotationen (Drehungen) des geführten Teils jeweils um die zur Führung parallele Achse und die beiden dazu senkrechten Achsen sowie linearer Versatz des geführten Teils längs der zwei letztgenannten orthogonalen Achsen. Der für die Bestimmung der Lage des geführten Teils in Führungsrichtung benutzte Maßstab kann zusätzlich mit Teilungsfehlern behaftet sein.

Diese Führungsfehlern lossen sich in zwei Klassen einteilen: die erste Klasse bilden die sog. langperiodischen Führungsfehler, die hauptsächlich auf Ebenheitsabweichungen der Führungsflächen und Deformationen der Führungselemente (Lager + Führung) infolge von Laständerungen zurückzuführen sind. Die zweite Klasse bilden die kurzperiodischen Führungsfehler, die in der Regel kein reproduzierbares Verhalten zeigen. Beide Fehlerklassen beeinflussen die Genauigkeit der Positionsbestimmung je nach konstruktivem Aufbau der Führung unterschiedlich stark. Beispielsweise ist der kurzperiodische Fehler für luftgelagerte Führungssysteme vernachlässigbar während er bei Wälzkörperlagern einen nicht unerheblichen Beitrag zum Gesamtfehler leisten kann.

Zur Kompensierung des Einflußes von Führungsfehlern lassen sich prinzipiell zwei Wege beschreiten: Entweder kompensiert man die Führungsfehler selbst oder man erfaßt sie und korrigiert das Meßergebnis für die Position des geführten Teils.

Von der erstgenannten Möglichkeit machen die in der DE-OS-2 231 644, der DE-AS-1 157 877, der DE-PS-1 915 940 und der DE-OS-2 647 147 beschriebenen Lösungen Gebrauch. Diese Lösungen erfordern jedoch einen großen mechanischen Aufwand, da den recht erheblichen Lasten ausgesetzten Führungselementen präzise Korrekturbewegungen aufgezwungen werden.

Aus der DE-PS-1 638 032 ist eine automatisch arbeitende Programmsteuerung bekannt, bei der die gemessenen Koordinatenwerte des geführten Teils mit einer ortsabhängigen Korrektur versehen werden. Die zur Korrektur benutzten Fehlerwerte werden vor dem eigentlichen Meßvorgang bestimmt und in Form einer Tabelle in einem Rechner gespeichert. Anschließend werden die gespeicherten Werte zur Modifizierung der Steuerbefehle des Programms herangezogen, durch die das geführte Teil automatisch positioniert wird.

Eine derartige Programmsteuerung benötigt einen relativ großen elektronischen Aufwand, weil für die Positionierung in mehreren Koordinaten ein mehrdimensionales Datenfeld zur Korrektur abgespeichert werden muß. Da aus den Korrekturwerten Steuerbefehle für die Maschine abgeleitet werden, ist deren Arbeitsgeschwindigkeit von der Rechengeschwindigkeit abhängig.

Der zweite Weg (Korrektur des Meßergebnisses) wird bei den in der DE-PS-1 964 470 sowie der DE-AS-2 248 194 beschriebenen Einrichtungen beschritten:

In der DE-PS-1 964 470 wird gelehrt, zur Erfassung der Führungsfehler alle Verschiebeachsen einer Maschine mit afokalen optischen Systemen zu versehen, die jeweils zwei Markenpaare bzw. Maßstäbe aufeinander abbilden. Das Anbringen von afokalen optischen Abbildungssystemen, die zur Erzielung hinreichend hoher Auflösung eine relativ große Öffnung besitzen müssen, ist jedoch nicht nur aufwendig und teuer sondern vergrößert außerdem die Abmessungen der betr. Maschine erheblich, was in der Regel unerwünscht ist.

Die DE-AS-2 248 194 beschreibt eine Portalmeßmaschine, die mit zwei in Verschieberichtung des Portals messenden Maßstäben, je einem für jede der beiden Säulen des Portals ausgerüstet ist. Mit dieser Maßnahme läßt sich nur die Drehung des Portals um die Vertikale, nicht der Versatz senkrecht zur Führungsrichtung erfassen. Durch den zusätzlichen Maßstab kann sich zudem die Maschine verteuern.

Aus der GB-PS-807 994 ist eine Bearbeitungsmaschine beschrieben, die mit Einrichtungen zur Ermittlung von Führungsfehlern versehen ist. Diese Einrichtungen messen den Abstand der geführten Teile zu einer Bezugsfläche im Maschinenbett. Die Signale der Abstandsmeßeinrichtungen dienen dazu, bei festgestelltem Versatz das geführte Teil wieder in seine exakte Lage zurückzusetzen und sind deshalb auf die Steuerung der Maschinenantriebe zurückgekoppelt.

Abgesehen davon, daß diese Lösung einen hohen steuerungstechnischen Aufwand erfordert, bleiben Ungeradlinigkeiten der Bezugsfläche unberücksichtigt.

Es ist die Aufgabe der vorliegenden Erfindung, ein Verfahren bzw. eine Einrichtung zur Erfassung von Führungsfehlern und Korrektur ihres Einflusses auf die Lagebestimmung des geführten Teils anzugeben, das einen vergleichsweise geringen fertigungstechnischen Aufwand erfordert und insbesondere für Koordinatenmeßmaschinen geeignet sind.

Diese Aufgabe wird durch die in den Ansprüchen 1 bzw. 3 angegebenen Maßnahmen gelöst.

Bei diesem Verfahren werden die relevanten Führungsfehler laufend, d. h. bei jeder Messung durch zwei oder mehrere Zusatzmeßeinrichtungen ermittelt. Der Vorteil bei dieser Lösung besteht darin, daß auch kurzperiodische Führungsfehler miterfaßt werden können, die kein reproduzierbares Verhalten zeigen. Der bauliche Aufwand zur Durchführung des Verfahrens ist vergleichsweise gering, da beispielsweise nur je ein Zusatztaster handelsüblicher Bauart für jeden zu erfassenden Führungsfehler benötigt wird und nicht ein komplettes Längenmeßsystem wie es die in der DE-AS-2 248 194 beschriebene Meßmaschine besitzt.

Dabei ist es keineswegs erforderlich die Bezugslinie selbst als hochgenaue Linearitätsnormal auszubilden. Es wird vielmehr eine weniger aufwendig herzustellende Bezugslinie verwendet und die einmal durch Messung gegen ein Linearitätsnormal ermittelten Abweichungen werden z. B. in Form einer Näherungsfunktion gespeichert und zur permanenten Korrektur der Meßwerte der Zusatzmeßeinrichtungen verwendet. Mit dieser Kombination zweier Korrekturverfahren läßt sich höchste Maschinengenauigkeit bei verhältnismäßig geringem Aufwand erzielen. Denn als Bezugslinien können beispielsweise die vorhandenen Führungsflächen der Maschine dienen, an denen die Spitzen von Zusatzsatztastern gleiten.

Dabei kann es zweckmäßig sein, die Korrekturfunktion wiederholt in größeren Zeitabständen neu zu ermitteln, um Führungsfehler z. B. aufgrund von Verschleiß korrigieren zu können.

Die Arbeitsgeschwindigkeit einer Meßmaschine wird weniger durch den Vorgang der eigentlichen Meßwertgewinnung bestimmt als vielmehr durch die Zeit, die für das Anfahren der zu messenden Punkte benötigt ist. Bei entsprechender Organisation des für die Auswertung benutzten Rechenprogrammes können die Korrekturwerte während dieser Fahrzeit an das vorhergehende Meßergebnis angebracht werden.

Zum anderen ist es nicht nötig alle denkbaren Korrekturen vorzunehmen. Beispielsweise wird es auf den Fall einer Meßmaschine in Portalbauweise bezogen weniger interessant sein Drehungen des Portals um seine Führungsachse zu korrigieren, da diese aufgrund der durch das Portal gebildeten großen Basis kaum ins Gewicht fallen. Dagegen ist es erforderlich, Drehungen um die Vertikale zu berücksichtigen, da sich hier die Einflüsse einer kleineren Basis und einer durch die Portalbreite gegebenen Hebelübersetzung auf die Meßgenauigkeit verstärken.

Zur näheren Erläuterung der Erfindung wird auf die Figuren der beigefügten Zeichnungen Bezug genommen:

Fig. 1 zeigt eine Prinzipskizze einer Längsführung;

Fig. 2 skizziert beispielhaft den Verlauf einer Korrekturfunktion zur Kompensation eines Führungsfehlers;

Fig. 3 und 4 zeigen die beiden zueinander beweglichen Teile eines Längenmeßsystems mit einer Einrichtung zur Erfassung von Führungsfehlern;

Fig. 5 skizziert eine Einrichtung zur Erfassung von Führungsfehlern;

Fig. 6 a-d skizzieren vier mögliche Meßwertkombinationen der in Fig. 5 gezeigten Zusatztaster;

Fig. 7 stellt die Brückenmeßmaschine aus Fig. 8 in Aufsicht dar;

Fig. 8 zeigt eine Meßmaschine in Brückenbauweise von vorn.

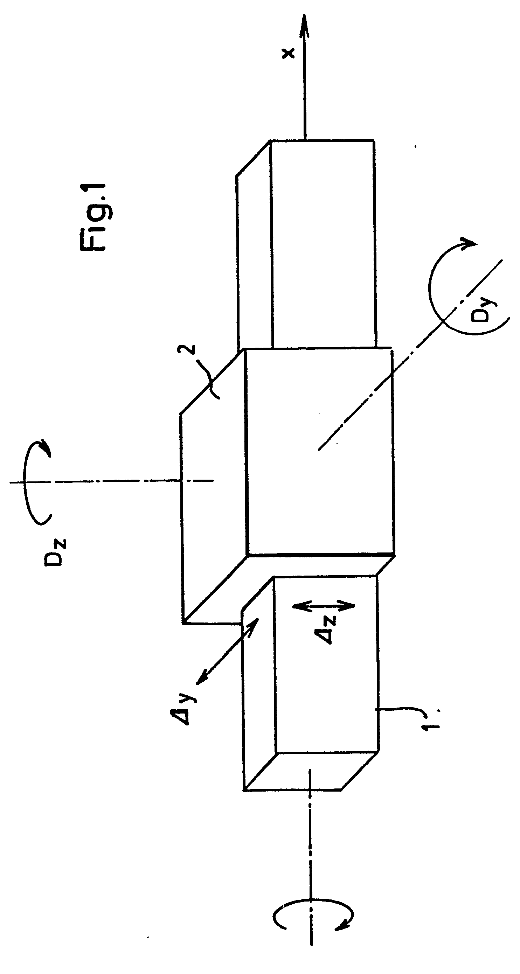

In Fig. 1 sind die fünf Führungsfehler skizziert, denen das längs der Führung 1 in X-Richtung verschiebliche Teil 2 unterliegen kann.
Es sind dies:

| 1. Seitlicher Versatz | $\Delta Y$ |
|---|---|
| 2. Höhenversatz | $\Delta Z$ |
| 3. Drehung um die Führungslängsachse | DX |
| 4. Drehung um die Vertikale | DZ |
| 5. Drehung um die Y-Achse | DY |

Alle diese Führungsfehler beeinflussen die Lage des geführten Teils 2 abhängig von seiner Stellung in X-Richtung.

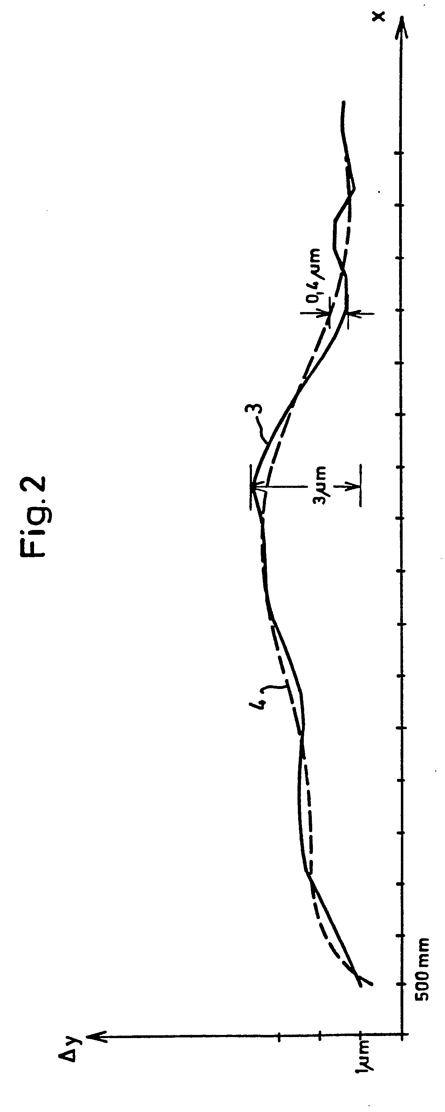

In Fig. 2 ist der langperiodische Versatz $\Delta Y$ des Teils 2 aufgrund der Nichtlinearität der Seitenführung der Führung 1 über den Verschiebebereich X aufgetragen. Die durchgezogene Kurve 3 stellt den gemessenen Verlauf des Versatzes beispielhaft dar, der Werte bis zu 3 µm erreicht. Die gestrichelt gezeichnete Kurve 4 ist ein bestmöglich an die Meßwerte angepaßtes Ausgleichspolynom achten Grades, das die Meßwerte innerhalb einer Bandbreite von ± 0,4 µm annähert. Mit dieser Korrekturfunktion lassen sich also die langperiodischen Fehler der Positionsbestimmung in Y infolge einer fehlerhaften Seitenführung der Führungsbahn in X um eine Größenordnung reduzieren, indem die Koeffizienten des Ausgleichspolynoms den Speicher eines Rechners eingegeben und im Rahmen des Meßprogramms berücksichtigt werden.

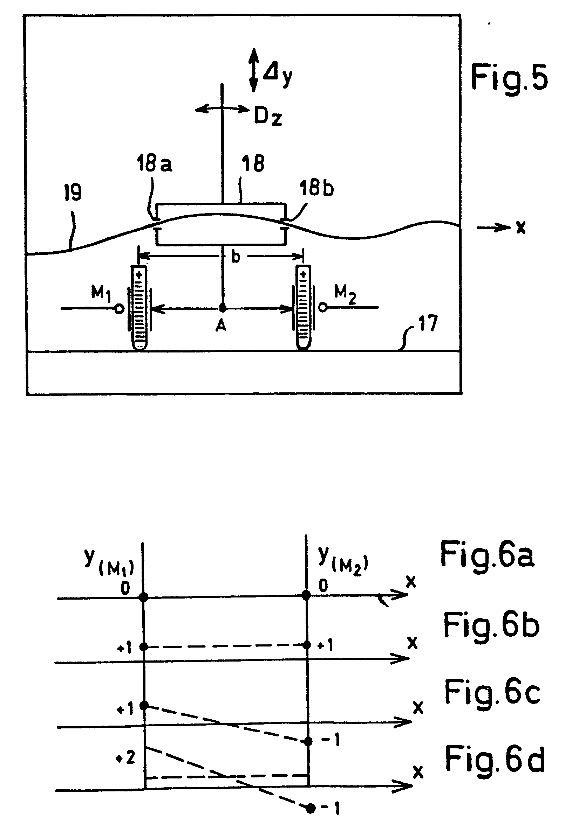

In Fig. 5 ist ein langs der Führung 19 in X-Richtung verschiebbarer Schlitten 18 skizziert, der aufgrund der überhöht dargestellten Nichtlinearität der Führung 19 einen Versatz $\Delta Y$ in Y-Richtung und Drehungen DZ um eine zur Zeichenebene senkrechte Achse Z erfährt. Am Schlitten 12 sind im Abstand b zwei Zusatztaster $M_1$ und $M_2$ befestigt, die an einer sich in X-Richtung erstreckenden Bezugsfläche 17 gleiten.

Mit diesem Tasterpaar $M_1$ und $M_2$ lassen sich Versatz und Drehung des Schlittens 18 gleichzeitig messen, und zwar berechnet sich die Drehung des Schlittens aus der Differenz der Meßwerte beider Taster dividiert durch ihren Abstand, während sich der Versatz als Mittelwert der Meßwerte ergibt. Fig. 6 skizziert die Meßwertanzeigen für je einen der 4 möglichen Fälle:

1. beide Meßwerte sind 0, d. h. es liegt weder Versatz nach Drehung vor (Fig. 6a).

2. die Meßwerte stimmen in Vorzeichen und Betrag überein, d. h. es liegt nur Versatz vor (Fig. 6b),

   3. die Meßwerte haben unterschiedliches Vorzeichen aber den gleichen Betrag, d. h. es liegt nur Drehung vor (Fig. 6c),

   4. die Meßwerte haben unterschiedliche Beträge, d. h. es liegt Versatz und Drehung vor (Fig. 6d).

   In der Praxis kommt fast ausschließlich der in Fig. 6d skizzierte Fall vor.

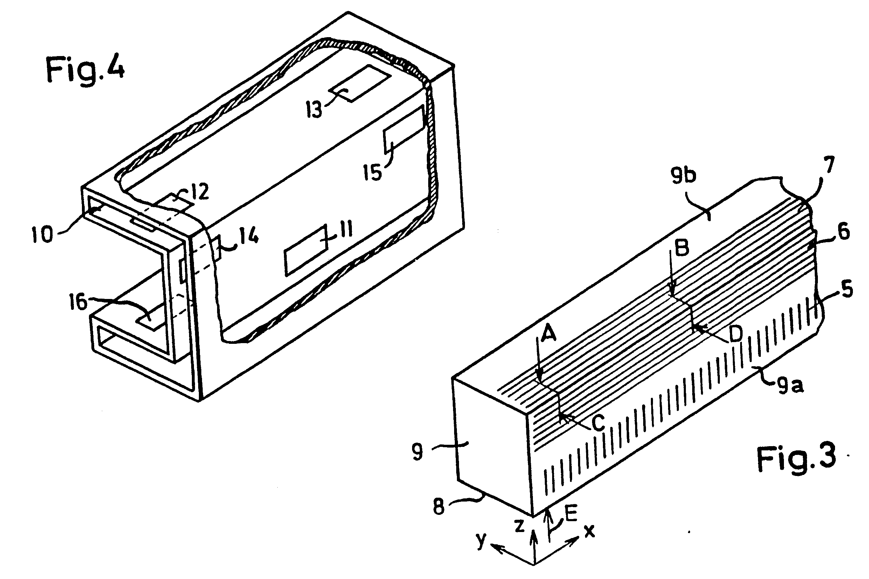

   Fig. 3 zeigt einen langgestreckten Tragkörper 9, auf dessen Seiten 9a und 9b und auf dessen Unterseite (verdeckt) je eine Schar sich in Längsrichtung erstreckender Linien (Längsmaßstäbe) aufgebracht sind. Mit einem solchen Normal lassen sich alle Fehler einer Führung erfassen, also die eingangs genannten drei Drehungen DX, DY, DZ und der Versatz $\Delta Y$ und $\Delta Z$, wenn man 5 Leseköpfe 12 -16 an den mit A-D bezeichneten Stellen auf den sich in die Führungsrichtung X erstreckenden Quader 9 aufsetzt.

   Diese Leseköpfe sind in einem in Fig. 4 dargestellten U-förmigen Gehäuse untergebracht und enthalten ein photoelektrisches Gittermeßsystem bekannter Bauart.

   Mit den jeweils an den Punkten A/B, C/D und A/E angesetzten Leseköpfen lassen sich Drehungen des geführten Teils 10 um die drei orthogonalen Raumachsen X, Y und Z ermitteln, indem man wie anhand von Fig. 5 und 6 beschrieben die Differenzen der Meßwerte der Lesekäpfe an den Stellen A und B, C und D bzw. A und E mißt und durch ihren Abstand dividiert.

   Zur Messung von Versatz $\Delta X$ und $\Delta Z$ ist wie schon beschrieben der Mittelwert des Meßwertes der auf die Flächen 9a bzw. 9b aufgesetzten Leseköpfe 12/13 bzw. 14/15 zu bilden.

   Der Tragkörper 9 ist zusätzlich wie durch die Striche auf der Fläche 9b angedeutet mit einem Maßstab versehen, der die Verschiebung des in Fig. 4 dargestellten Gehäuses in X-Richtung mißt. In Verbindung mit einer entsprechenden Leseeinrichtung 11, die in dem gleichen Gehäuse 10 untergebracht ist, ergibt sich ein kompaktes Meßsystem, das die Verschiebung in einer Koordinate mißt und den Einfluß aller Führungsfehler miterfaßt.

   Ein solches Meßsystem ist beispielsweise zum Anbau an die Führungen einer Meß- bzw. Bearbeitungsmaschine geeignet, die dann in der Positioniergenauigkeit erheblich verbessert ist.

   Weiterhin kann ein derartiges Meßsystem, mobil ausgeführt, zur Endkontrolle an Maschinen mit hochpräzisen Führungen eingesetzt werden. Bisher wurden Führungen in Meßmaschinen mit Hilfe zweier verschiedener Geräte, nämlich mit einem Laserinterferometer auf Linearität und mit einem Autokollimationsfernrohr auf Verkippungen geprüft.

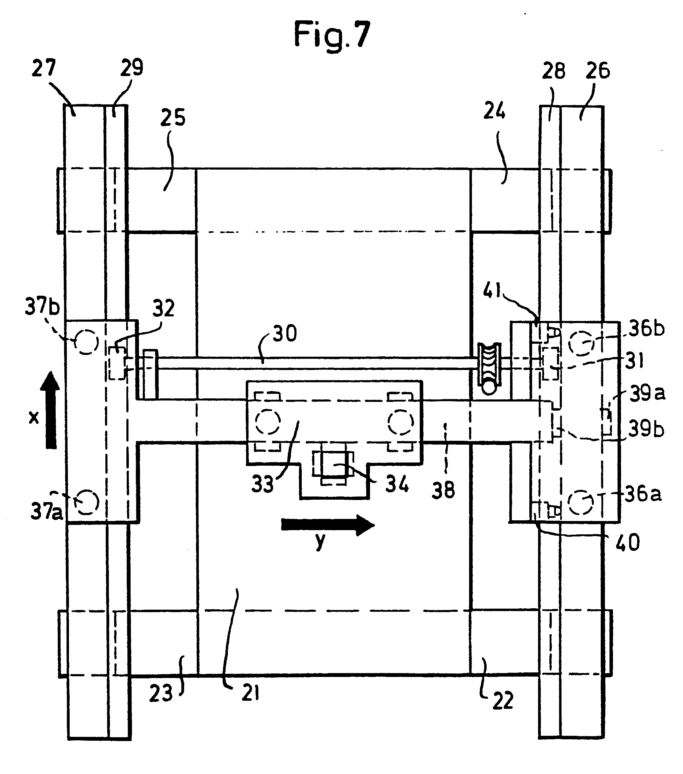

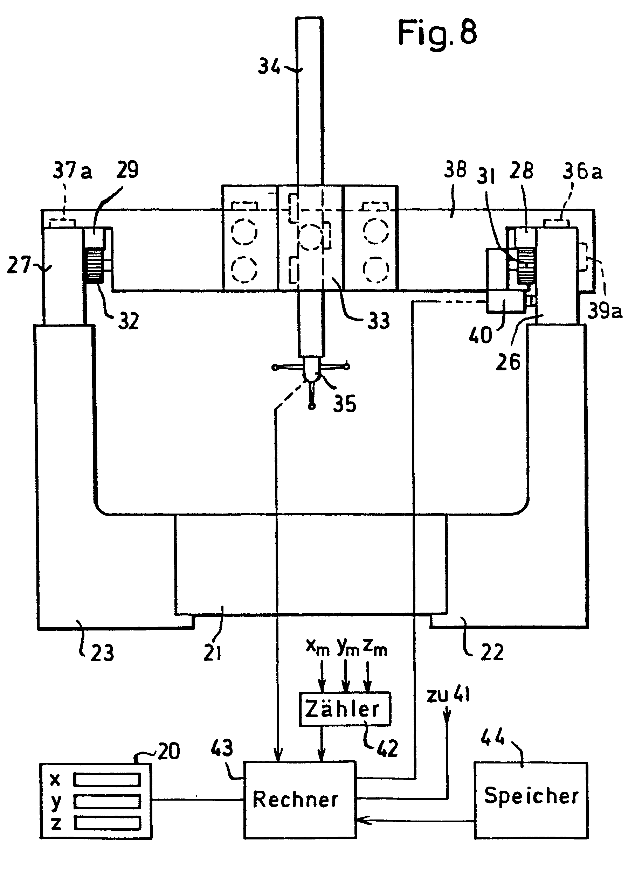

   In Fig. 7 und 8 ist als weiteres Ausführungsbeispiel der Erfindung eine beidseitig angetriebene schnelle Meßmaschine in Brückenbauweise dargestellt, die mit dem in Fig.

5 skizzierten Meßsystem ausgerüstet ist. Die Maschine besitzt vier Standfüße 22-25, zwischen denen der zur Werkstückaufnahme dienende Tisch 21 eingelassen ist, und die zwei parallele Führungsschienen 26 und 27 tragen. Längs dieser Schienen beweglich ist eine über je zwei Luftlagerpaare 36a, b und 37a, b aufliegende Brücke 38, die seinerseits dem Schlitten 33 als Führungsbahn dient. Der Schlitten 33 führt die in der Senkrechten bewegliche Pinole 34, an der ein Taster 35 befestigt ist.

   Der Antrieb der Brücke 38 erfolgt über zwei Ritzel 31 und 32, die mit den an den Führungen 26 und 27 befestigten Zahnstangen 28 und 29 kämmen. Zur Seitenführung der Brücke 38 dient das Lagerpaar 39a, b.

   Aufgrund von Teilungsfehlern im antreibenden System Ritzel-Zahnstange können kleine Drehungen der Brücke 38 um die Vertikale auftreten, denen aufgrund der kleinen Basis des Lagerpaares 39a, b nicht entgegengewirkt wird. Somit erfolgt die Schrägstellung der Brücke 38 aufgrund der Gelenkwirkung des Lagers 39 zwangsfrei. Meßtechnisch schwer erfaßbare Verbiegungen der Brücke 38 in sich werden also vermieden.

   Zur Messung von Kippung und Versatz der Brücke 38 trägt diese zwei Taster 40 und 41, die an der Führungsfläche für das Lager 39b an der Innenseite der Schiene 26 gleiten.

   Die Ausgangssignale der Taster 40 und 41 werden dem Rechner 43 der Meßmaschine zugeführt, der auch die Meßwerte $X_m$, $Y_m$, $Z_m$ der drei Koordinatenmeßeinrichtungen (nicht dargestellt) der Maschine verarbeitet, und zu deren Korrektur im Rahmen eines geeigneten Rechenprogramms verwendet.

   Dieser Rechner besitzt einen Speicher 44, in den die rein langperiodischen Linearitäts-Abweichungen der Innenseite der Schiene 26 in Form einer Näherungsfunktion (vgl. Fig. 2) eingegeben sind.

   Beim Antastvorgang werden über einen vom Tastkopf 35 abgeleiteten Impuls die im Moment der Antastung gemessenen Koordinatenwerte $X_m$, $Y_m$, $Z_m$ vom Zähler 42 in den Rechner 18 übernommen. Im Rahmen des Auswerteprogramms werden die Meßwerte $X_m$ und $Y_m$ durch die Meßwerte der Zusatztaster 40 und 41 wie anhand von Fig. 5 beschrieben korrigiert, nachdem die letztgenannten Meßwerte ihrerseits mit Hilfe der gespeicherten Näherungsfunktion modifiziert worden sind.

   Das auf diese Weise zweifach korrigierte Meßergebnis wird anschließend auf der Anzeigeeinheit 20 sichtbar gemacht.

**Patentansprüche**

   1. Verfahren zur Ermittlung und Korrektur von Führungsfehlern, bei dem die gemessenen Koordinatenwerte für ein geführtes Teil mit einer ortsabhängigen Korrektur versehen werden, indem die Führungsfehler durch mindestens zwei am längs der Führung verschieblichen Teil befestigte Zusatzmeßeinrichtungen ermittelt werden, die den Abstand zu mindestens einer sich in Führungsrichtung erstreckenden Bezugslinie messen, und das Ausgangssignal der Zusatzmeßeinrichtungen mit den Ausgangssignalen der Koordinatenmeßeinrichtungen zur Korrektur der Führungsfehler verknüpft wird, dadurch gekennzeichnet, daß die Abweichungen der Bezugslinie von einem Linearitätsnormal vor dem eigentlichen Meßvorgang bestimmt und anschließend in einem elektronischen Rechner gespeichert werden, daß die gemessenen Koordinatenwerte für das geführte Teil mit den Ausgangssignalen der Zusatzmeßeinrichtungen und mit den gespeicherten Abweichungen korrigiert werden, und daß die so korrigierten Meßwerte anschließend einer Anzeige- bzw. Aufzeichnungseinheit zugeführt werden.

2. Verfahren nach Anspruch 1, dadurch gekennzeichnet, daß aus den gemessenen Abweichungen eine Näherungsfunktion berechnet wird und diese Näherungsfunktion gespeichert und zur Korrektur verwendet wird.

3. Einrichtung zur Durchführung des Verfahrens nach einem der Ansprüche 1 bis 2, wobei das geführte Teil mindestens zwei Zusatzmeßeinrichtungen (12 - 16; M$_1$, M$_2$: 40, 41) trägt, deren Meßrichtung senkrecht zur Führungsrichtung verläuft und parallel zur Führung (9, 19) mindestens eine sich über den Verschiebebereich des geführten Teils (18) erstreckende Bezugslinie (5 - 8, 17) angeordnet ist, wobei die Zusatzmeßeinrichtungen (12 - 16; M$_1$, M$_2$: 40, 41) den Abstand zwischen geführten Teil (18) und Bezugslinie (6 - 8, 17) messen, dadurch gekennzeichnet, daß die Ausgangssignale der Zusatzmeßeinrichtungen (12 - 16; M$_1$, M$_2$: 40, 41) einem Rechner (43, 44) zugeführt sind, der die Koordinatenmeßwerte des geführten Teils (18) verarbeitet, und daß in den Speicher des Rechners (43, 44) die Linearitätsabweichungen der Bezugslinie (6 - 8, 17) eingegeben sind.

4. Einrichtung nach Anspruch 3, dadurch gekennzeichnet, daß die Zusatzmeßeinrichtungen Taster (M$_1$, M$_2$) sind, die an einer sich parallel zur Führung (19) erstreckenden Bezugsfläche (17) anliegen.

5. Einrichtung nach Anspruch 4, dadurch gekennzeichnet, daß die Bezugsfläche (17) ein Ebenheitsnormal oder eine Fläche der Führung (9, 19) selbst ist.

6. Einrichtung nach einem der Ansprüche 3 bis 5, dadurch gekennzeichnet, daß das geführte Teil die Brücke (38) eines Koordinatenmeßgerätes in Brückenbauweise ist und je ein Antrieb (31, 32) für beide Seiten der Brücke (38) vorgesehen ist, daß zwei Zusatzmeßeinrichtungen (40, 41) an einer der beiden Seiten der Brücke (38) angeordnet sind und daß die Seitenführung (39) der Brücke (38) eine kurze Basis besitzt, die kleine Drehungen der Brücke um die Vertikale zwangsfrei erfolgen läßt.

7. Einrichtung nach Anspruch 3, dadurch gekennzeichnet, daß als Bezugslinie eine Maßstabteilung in Form einer Schar sich in Führungsrichtung erstreckender Bezugslinien (6 - 8) vorgesehen ist, daß diese Maßstabteilung zusammen mit der Maßstabteilung zur Messung in Führungsrichtung (5) auf ein langgestrecktes Bezugsnormal (9) aufgebracht ist, und daß ein in Führungsrichtung verschiebbares Gehäuse (10) vorgesehen ist, das den Lesekopf (11) für die Maßstabteilung in Führungsrichtung sowie mindestens zwei weitere Leseköpfe (12 - 16) besitzt, die den Abstand zwischen Gehäuse (10) und Bezugsnormal (9) messen.

8. Einrichtung nach Anspruch 7, gekennzeichnet durch ihre Verwendung als mobile Prüfeinrichtung für Längsführungen.

9. Einrichtung nach einem der Ansprüche 4 - 7, gekennzeichnet durch ihre Ausbildung als Anbaumeßsystem.

**Claims**

1. A method of determining and correcting errors in guidance, in which measured coordinate values of a guided part are provided with a position dependend correction by determining the guidance errors using at least two additional measurement devices which are carried by the part which is displaceable along the guide, which additional measuring devices measure the distance from at least one reference line extending in the direction of the guide, and the output signal of the additional measuring devices is combined with the output signal of the coordinate measuring devices for the correction of guidance errors, characterized by the fact that the deviations between the reference line and a linearity standard are determined in a first step before the measuring cycle starts which deviations are then stored in an electronic calculator, that the measured coordinate values of the guided part are corrected by the output signals of the additional measuring devices and are further corrected by the stored deviations, and that the resulting corrected measuring values are then fed to a display unit or to a recording unit.

2. A method according to claim 1, characterized by the fact from the measured deviations an approximation is calculated which is then stored and used for permanent correction.

3. A device for carrying out the method according to one of the claims 1 - 2, in which device the guided part (18) carries at least two additional measuring devices (12 - 16; M$_1$, M$_2$; 40, 41) having a measuring direction perpendicular to the guidance direction and in which device a reference line (6 - 8; 17) is parallel to the guide (9, 19) and extends over the displacement range of the guided part (18), the additional measuring devices (12 - 16; M$_1$, M$_2$; 40, 41) measuring the distance between the guided part (18) and the reference line (6 - 8, 17), characterized by the fact that the output signals of the additional measuring devices (12 - 16; $M_1$, $M_2$; 40, 41) are fed into an electronic calculator (43, 44) which processes the coordinate values of the guided part (18), and that the linearity deviations of the reference line (6 - 8; 17) are fed into the memory of the calculator (43, 44).

4. A device according to claim 3, characterized by the fact that the additional measuring devices are probes ($M_1$, $M_2$) being in contact to a reference surface (17) which extends parallel to the guide (19).

5. A device according to claim 4, characterized by the fact that a planarity standard or a surface of the guide (9, 19) itself is used as the reference surface (17).

6. A device according to one of the claims 3 - 5, characterized by the fact that the guided part is the bridge (38) of a coordinate-measuring instrument of the bridge type, and that drives (31, 32) for longitudinally displacing each side of the bridge (38) are provided, that two additional measuring devices (40, 41) are arranged on one of the two sides of the bridge (38) and that the lateral constraint (39) of the bridge (38) has a longitudinally short base which readily permits small angular displacement of the bridge about the vertical.

7. A device according to claim 3, characterized by the fact that the reference line is a scale graduation in the form of a family of reference lines (6 - 8) extending in the guidance direction, that this graduation is arranged on an elongate reference standard (9) in addition to a scale graduation (5) for measurement in the guidance direction, and that a housing (10) is provided which is displaceable in the direction of guidance and contains a reading head (11) for the scale (5) in the direction of guidance and has at least two additional reading heads (12 to 16) for measuring the offset distance between the housing (10) and the reference standard (9).

8. A device according to one of the claims 4 - 7, characterized by its use as a mobile testing device for longitudinal guides.

9. A device according to one of the claims 4 - 7, characterized by the fact that it is developed as an add-on measurement system.

**Revendications**

1. Procédé pour relever et corriger des défauts de guidage, selon lequel les valeurs de coordonnées mesurées pour un élément guidé sont pourvues d'une correction fonction du lieu, du fait que les défauts de guidage sont déterminés par au moins deux dispositifs de mesure supplémentaires fixés à l'élément, déplaçable le long d'un dispositif de guidage, les dispositifs de mesure supplémentaires mesurant la distance par rapport à au moins une ligne de référence s'étendant dans la direction de guidage et le signal de sortie des dispositifs de mesure supplémentaires étant combiné avec les signaux de sortie des dispositifs de mesure des coordonnées en vue de la correction des défauts de guidage, caractérisé en ce que, avant le processus de mesure proprement dit, on détermine les écarts de la ligne de référence par rapport à un étalon de linéarité et on mémorise les écarts ensuite dans un calculateur électronique, en ce que l'on corrige les valeurs de coordonnées mesurées pour l'élément guidé, à l'aide des signaux de sortie des dispositifs de mesure supplémentaires et des écarts mémorisés et que l'on applique ensuite les valeurs mesurées ainsi corrigées à une unité d'affichage ou d'enregistrement.

2. Procédé selon la revendication 1, caractérisé en ce que l'on calcule une fonction d'approximation à partir des écarts mesurés, on mémorise cette fonction d'approximation et on l'utilise pour la correction.

3. Dispositif pour la mise en oeuvre du procédé selon une des revendications 1 et 2, dans lequel l'élément guidé porte au moins deux dispositifs de mesure supplémentaires (12 - 16; $M_1$, $M_2$; 40, 41) dont la direction de mesure est perpendiculaire à la direction de guidage, et dans lequel au moins une ligne de référence (6 - 8, 17), s'étendant sur la zone de déplacement de l'élément guidé (18), est disposée parallèlement au dispositif de guidage (9, 19), les dispositifs de mesure supplémentaires (12 - 16; $M_1$, $M_2$; 40, 41) mesurant la distance entre l'élément guidé (18) et la ligne de référence (6 - 8, 17), caractérisé en ce que les signaux de sortie des dispositifs de mesure supplémentaires (12 - 16; $M_1$, $M_2$; 40, 41) sont envoyés à un calculateur (43, 44) qui traite les valeurs mesurées des coordonnées de l'élément guidé (18) et que les écarts de linéarité de la ligne de référence (6 - 8, 17) ont été introduits dans la mémoire du calculateur (43, 44).

4. Dispositif selon la revendication 3, caractérisé en ce que les dispositifs de mesure supplémentaires ($M_1$, $M_2$) sont des palpeurs qui sont appliqués contre une surface de référence (17) s'étendant parallèlement au dispositif de guidage (19).

5. Dispositif selon la revendication 4, caractérisé en ce que la surface de référence (17) est un étalon de planéité ou une surface du dispositif de guidage (9, 19) lui-même.

6. Dispositif selon une des revendications 3 à 5, caractérisé en ce que l'élément guidé est le pont (38) d'un appareil de mesure en coordonnées de type en pont, avec prévision d'un système d'entraînement (31, 32) pour chacun des deux côtés du pont (38), que deux dispositifs de mesure supplémentaires (40, 41) sont prévus sur un des deux côtés du pont (38) et que le guidage latéral (39) du pont (38) possède une base courte qui permet, sans contraintes, de petits pivotements du pont sur la verticale.

7. Dispositif selon la revendication 3, caractérisé en ce que, en tant que ligne de référence, on a prévu une échelle graduée sous forme d'une série de lignes de référence (6 - 10) s'étendant dans la direction de guidage, que cette échelle graduée est disposée sur un étalon de référence (9) de forme allongée, ensemble avec l'échelle graduée pour la mesure dans la direction de guidage (5), et que l'on a prévu un boîtier (10), déplaçable dans la direction de guidage, qui possède la tête de lecture (11) pour l'échelle graduée dans la direction de guidage, ainsi qu'au moins deux têtes de lecture supplémentaires (12 - 16) qui mesurent la distance entre le boîtier et l'étalon de référence (9).

8. Dispositif selon la revendication 7, caractérisé par son utilisation en tant que dispositif de contrôle mobile pour des guides longitudinaux.

9. Dispositif selon une des revendications 4 à 7, caractérisé par sa réalisation comme un système de mesure rapporté.

Fig.1

0 082 441

Fig. 2

Fig.3

Fig.4

Fig.5

Fig.6a

Fig.6b

Fig.6c

Fig.6d

# Fig.7

Fig. 8